# EUROPÄISCHE PATENTANMELDUNG

(11) **EP 2 012 030 A1**
(43) Veröffentlichungstag der Anmeldung: **07.01.2009**
(21) Anmeldenummer: 07111570.3
(22) Anmeldetag: 02.07.2007
(51) Int. Cl.: F16C 19/18, F16C 33/40

(54) **Werkzeugvoreinstellgerät und dazugehöriges Wälzlager**

(71) Anmelder: Alfa-Sys AG, 9491 Ruggell (LI)
(72) Erfinder: Graf, Helmuth, 9436 Balgach (CH)
(74) Vertreter: Büchel, Kaminski & Partner

(57) **Zusammenfassung**

Die Erfindung betrifft ein Wälzlager (1) eines Werkzeugvoreinstellgerätes, mit einem hohlkegelstumpfförmigen Wälzlagerkäfig (2), zum Einsatz in eine konische Lagerbüchse (8) und zur Aufnahme eines Werkzeugs mit konisch ausgebildetem Lagerzapfen oder einer Reduktionshülse mit konischem Aussenmantel, wobei der Wälzlagerkäfig (2) eine Aussenmantelfläche, eine Innenmantelfläche und eine Drehachse aufweist.

Das Wälzlager (1) ist als Kugellager und der Wälzlagerkäfig (2) als Käfig für je einzeln in Öffnungen eingebettete Kugeln (5) ausgebildet, sodass die in den Öffnungen angeordneten Kugeln (5) über die Innen- und Aussenmantelfläche hervorstehen. Die Kugeln sind so im Wälzlagerkäfig (2) angeordnet, dass sie mindestens einen oberen Kugelkranz (6) in einem oberen Drittel des Wälzlagerkäfigs und einen unteren Kugelkranz (7) in einem unteren Drittel des Wälzlagerkäfigs bilden.

## Beschreibung

Die Erfindung betrifft ein Wälzlager eines Werkzeugvoreinstellgeräts nach dem Oberbegriff des Anspruchs 1 und ein Werkzeugvoreinstellgerät nach dem Oberbegriff des Anspruchs 14.

Werkzeugvoreinstellgeräte werden zum Beispiel in Verbindung mit spanenden Bearbeitungsmaschinen verwendet, wo eine Vielzahl von austauschbaren Werkzeugen bzw. Präzisionswerkzeugen benötigt wird. Diese können vor dem Gebrauch in dem Voreinstellgerät vermessen und voreingestellt werden, was so geschieht, dass die Werkzeuge mit ihrem, meist kegeligen, Lagerzapfen in die entsprechend konische Lagerhülse des Gerätes gesteckt und durch Rotation innerhalb der Lagerbüchse in mehreren Stellungen vermessen - und falls nötig, auch eingestellt - werden.

Unter Werkzeugvoreinstellgerät wird im Rahmen der Erfindung jegliche Art von Gerät verstanden, das zum Vermessen und/oder Voreinstellen eines Werkzeugs ausgebildet ist.

Durch das Eigengewicht des Werkzeuges, das bei grösseren Werkzeugen erheblich sein kann, ist normalerweise eine Rotation in der Lagerhülse kaum oder nur unter grossem Kraftaufwand möglich, da die Reibung zwischen der Zapfenoberfläche und der Konusinnenfläche der Lagerhülse relativ hoch ist. Gerade aber beim Ausmessen von Präzisionswerkzeugen ist es erforderlich, dass die Werkzeuge in der Lagerhülse leicht rotierbar sind.

Eine bekannte Lösung sieht gemäss der DE 1 951 151 A vor, dass das Werkzeug in die konische Bohrung einer Reduktionshülse eingesteckt wird. Die Reduktionshülse ist mit ihrer zylindrischen Aussenmantelfläche über eine Wälzlagereinheit innerhalb einer zylindrischen Gehäusebohrung abgestützt. Der Nachteil dieser Lösung besteht darin, dass zur exakten Ausrichtung der Drehachse zwei genauestens übereinstimmende Wälzlager benötig werden. Derartige Wälzlagereinheiten sind in der Herstellung ausserordentlich aufwändig. Ferner besteht die Gefahr, dass die Wälzlagereinheit ein Spiel aufweist, wodurch beim Ausmessen die geforderte Rundlaufgenauigkeit nicht mehr gewährleistet ist.

Die EP 0 498 232 B1 offenbart ein Gerät zum Voreinstellen eines Werkzeugs mit einer konischen Lagerbüchse, in welche ein als Nadellager ausgebildetes Wälzlager eingesetzt ist. Das Wälzlager, das aus einem Käfig mit einzeln eingesetzten Nadeln besteht, ist zur Aufnahme des zu vermessenden Werkzeugs oder einer konischen Reduktionshülse ausgebildet. Durch die Reduktion der Auflageflächen des Werkzeugs, wobei das Eigengewicht des Werkzeugs bei einer konischen Ausbildung des Wälzlagers zusätzlich ein Spiel desselben wesentlich verringert, kann die Rundlaufgenauigkeit im Vergleich zu der in der DE 1 951 151 A beschriebenen Lösung verbessert werden.

Bedingt durch die Form der Nadeln ergibt sich für das eingesetzte Werkzeug eine Linienauflage auf den Nadeln des Nadellagers. Dies bewirkt bei einer Rotation eine Reibung der Nadeln auf die Konusfläche des kegeligen Lagerzapfens, da die Umfangsgeschwindigkeit des Lagerzapfens am Berührpunkt des Zapfens mit dem oberen Ende einer Nadel grösser ist als die am Berührpunkt des Zapfens mit dem unteren Ende dieser Nadel. Dieselbe unerwünschte Reibung tritt auch zwischen den Nadeln und der konischen Lagerbüchse auf, da sich für das Nadellager ebenso eine Linienauflage auf der konischen Lagerbüchse ergibt. Durch das oftmals sehr hohe Gewicht eines eingesetzten Werkzeugs können durch diese Reibung Abnutzungserscheinungen und Beschädigungen des Nadellagers und der Lagerbüchse auftreten.

Als weiterer Nachteil erweist sich, dass gattungsgemässe Nadeln eines solchen Nadellagers nur auf eine Genauigkeit von etwa 2µm hergestellt werden. Dies wirkt sich negativ auf die Rundlaufgenauigkeit aus und birgt eine Taumelgefahr.

Einige Werkzeugvoreinstellgeräte des Standes der Technik verfügen über die Funktion, das eingesetzte, zu vermessende Werkzeug anhand einer Festklemmvorrichtung in einer gewünschten Stellung zu fixieren. Dazu kann die das Werkzeug umgreifende Festklemmvorrichtung durch einen Benutzer in eine geschlossene Stellung gebracht werden, sodass keine Rotationsbewegung des Werkzeugs zugelassen ist und entsprechende Vermessungen oder Eingestellungen am Werkzeug in der gewünschten fixierten Stellung durchgeführt werden können. Durch das Angreifen und Fassen des Werkzeugs durch die Festklemmvorrichtung beim Schliessen derselben kommt es vor, dass das Werkzeug minimal verrutscht, sodass sich Fehler beim Vermessen oder Einstellen des Werkzeugs ergeben können.

Eine Aufgabe der Erfindung ist somit das Bereitstellen eines verbesserten Werkzeugvoreinstellgeräts mit konischer Lagerbüchse.

Eine weitere Aufgabe der Erfindung ist das Bereitstellen eines verbesserten Wälzlagers zum Einsatz in eine konische Lagerbüchse und zur Aufnahme eines Werkzeugs mit konischem Lagerzapfen, wobei insbesondere eine höhere Rundlaufgenauigkeit und ein geringerer Verschleiss ermöglicht werden.

Eine weitere Aufgabe ist das Bereitstellen einer verbesserten Fixierfunktion eines Werkzeugvoreinstellgeräts zum Fixieren eines eingesetzten Werkzeugs in einer gewünschten Drehstellung.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gemäss der Erfindung ist ein Wälzlager, das in eine konische Lagerbüchse eines Werkzeugvoreinstellgerätes eingesetzt wird und als Aufnahme für einen konischen Lagerzapfen eines zu vermessenden Werkzeugs fungiert, als Kugellager ausgebildet. Das Kugellager ist aus einem hohlzylinderförmigen Lagerkäfig mit einer Drehachse und einer Mehrzahl von darin eingebetteten Kugeln aufgebaut. Die Kugeln sind dabei so in den Käfig eingebracht, dass sie frei um ihren Kugelmittelpunkt rotierbar aber dennoch im Käfig positionsfixiert sind, wobei die Kugeln in für je eine Kugel vorgesehenen Aussparungen des Lagerkäfigs angeordnet sind.

Die Anordnung der Kugeln bildet dabei mindestens einen oberen Kugelkranz in einem oberen Drittel des Kugellagers und einen unteren Kugelkranz in einem unteren Drittel des Kugellagers. Die Kugeln ragen jeweils über eine Innenmantelfläche und eine Aussenmantelfläche des hohlzylinderförmigen Lagerkäfigs hinaus, sodass das passend zur Lagerbüchse geformte Kugellager beim Einsetzen in diese jeweils auf den Kugeln punktförmig aufliegt. Ebenso liegt ein in das Kugellager eingesetzter konischer Lagerzapfen des einzustellenden Werkzeugs punktförmig jeweils auf den Kugeln auf, sodass das Kugellager als Punktauflagen bildende Hülse zwischen Lagerbüchse und Lagerzapfen fungiert. Vorzugsweise kommen dabei weder die Lagerbüchse noch der Lagerzapfen mit dem Lagerkäfig in Berührung.

Bei einer Rotationsbewegung des eingesetzten Werkzeugs um die Drehachse rollen die Kugeln sowohl auf der anliegenden Mantelfläche des konischen Werkzeuglagerzapfens als auch auf der anliegenden Mantelfläche der konischen Lagerbüchse, sodass sich relativ zur Lagerbüchse für den Lagerkäfig die halbe Rotationsgeschwindigkeit derer des Werkzeugs ergibt.

Durch die erfindungsgemäss gebildeten Punktauflagen entstehen bei einer Rotation des eingesetzten Werkzeugs trotz den in verschiedenen Höhen unterschiedlich hohen Umfangsgeschwindigkeiten des konisch ausgebildeten Lagerzapfens keine nachteiligen Reibungen an den Kugeln des Kugellagers.

Da des Weiteren ein eingesetztes Werkzeug einen hohen Druck auf die punktförmigen Auflagestellen ausübt und alle Komponenten konisch ausgebildet sind, stellt sich sofort nach Einsetzen des Werkzeugs durch seine Schwerkraft eine stabile Position des Kugellagers und des Werkzeugs in der Lagerbüchse ein. Bei Linienauflagen tritt dieser Effekt dagegen nur abgeschwächt auf. Durch die erfindungsgemässe Ausbildung des Wälzlagers als Kugellager sind somit eine verbesserte Rundlaufgenauigkeit und geringere Taumelfehler realisierbar, wobei durch die Vermeidung von Reibungen beim Rotieren des Werkzeugs zusätzlich der Verschleiss des Wälzlagers, des Werkzeuglagerzapfens und der Lagerbüchse verringert wird.

Ein weiterer Vorteil der Ausbildung des Wälzlagers als Kugellager liegt bei der Herstellung der Kugeln. So betragen Toleranzen bei der Herstellung solcher Kugeln üblicherweise etwa ±0.25µm, wohingegen übliche Toleranzen bei der Herstellung von gattungsgemässen Nadeln etwa bei ±2µm liegen, was die Rundlaufgenauigkeit eines in ein erfindungsgemässes Wälzlager eingesetzten Werkzeugs zusätzlich erhöht.

Insbesondere sind die Kugeln eines Kugelkranzes im Wesentlichen entlang einer Umfangslinie des Kugellagerkäfigs angeordnet, wobei sich eine solche Umfangslinie durch einen Schnitt einer senkrecht zur Drehachse ausgerichteten Ebene mit dem Kugellagerkäfig ergibt. Detaillierter aufgezeigte Ausführungsmuster der Kugelkränze sind den untenstehenden Figuren drei bis sechs und den dazugehörigen Figurenbeschreibungen zu entnehmen.

Zur Behebung des Problems eines Verrutschens des Werkzeugs bei einem Festklemmen dessen in einer gewünschten Drehposition durch eine das Werkzeug greifende oder andersartig festhaltende Fixiervorrichtung kann das Wälzlager eine sich beispielsweise bündig an einen unteren Rand des Wälzlagerkäfigs anschliessende zylindrische Verlängerung aufweisen. Befindet sich nun ein in ein solches Wälzlager mit Verlängerung eingesetztes Werkzeug in gewünschter Drehstellung, kann die Fixiervorrichtung geschlossen und somit der Wälzlagerkäfig relativ zur Lagerbüchse drehfixiert werden. Somit können sich die auf der Lagerbüchse aufliegenden Kugeln des Wälzlagers nicht mehr wälzen, sodass auch das in das Wälzlager eingesetzte und auf den Kugeln aufliegende Werkzeug rotationsfixiert ist.

Erfindungsgemäss ist also ein Fixieren einer gewünschten Drehstellung des zu vermessenden Werkzeugs ermöglicht, ohne das zu vermessende Werkzeug selbst anzugreifen oder zu berühren, wodurch die Gefahr eines Verrutschens oder Verschiebens des Werkzeugs verringert werden kann. Da durch die Konizität der Komponenten und die schwere Masse des Werkzeugs an den punktförmigen Auflagestellen des Wälzlagers ein hoher Druck besteht, ist der Lagerkäfig selbst beim Angreifen durch die Festklemmvorrichtung sowohl in Richtung der Drehachse als auch senkrecht dazu gut positionsfixiert und gegen Verrutschen geschützt, sodass trotz dem Vorgang des Festklemmens das zu vermessende Werkzeug die exakte Stellung beibehält.

Die Festklemmvorrichtung ist insbesondere so ausgebildet, dass sie kraftschlüssig den Wälzlagerkäfig fixiert, wobei die dabei angreifenden Kräfte im Wesentlichen in eine senkrecht zur Wälzlagerdrehachse ausgerichtete Richtung zeigen. Dies vermindert zusätzlich eine Verrutschgefahr des Wälzlagers und somit auch des darin eingesetzten, zu vermessenden Werkzeugs.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a und b: ein erfindungsgemässes Wälzlager eingesetzt in eine Lagerbüchse;
- Fig. 2: ein erfindungsgemässes Wälzlager in einer Lagerbüchse mit einem Lagerzapfen eines zu vermessenden Werkzeugs;
- Fig. 3: eine erste Ausführungsform eines erfindungsgemässen Wälzlagers;
- Fig. 4a und b: eine zweite Ausführungsform eines erfindungsgemässen Wälzlagers;
- Fig. 5: eine dritte Ausführungsform eines erfindungsgemässen Wälzlagers;
- Fig. 6: eine vierte Ausführungsform eines erfindungsgemässen Wälzlagers;
- Fig. 7a und b: ein erfindungsgemässes Wälzlager mit einer zylindrischen Verlängerung;
- Fig. 8a und b: ein erfindungsgemässes Wälzlager mit einer darin eingesetzten Reduktionshülse;
- Fig. 9a und b: ein erfindungsgemässes Werkzeugvoreinstellgerät mit einer erfindungsgemässen Festklemmvorrichtung für das Wälzlager;
- Fig. 10a und b: ein Werkzeugvoreinstellgerät mit einem Wälzlager mit erfindungsgemässer zylindrischer Verlängerung und einer erfindungsgemässen Festklemmvorrichtung; und
- Fig. 11 und 12: weitere Ausführungsformen eines erfindungsgemässen Wälzlagers und der Festklemmvorrichtung.

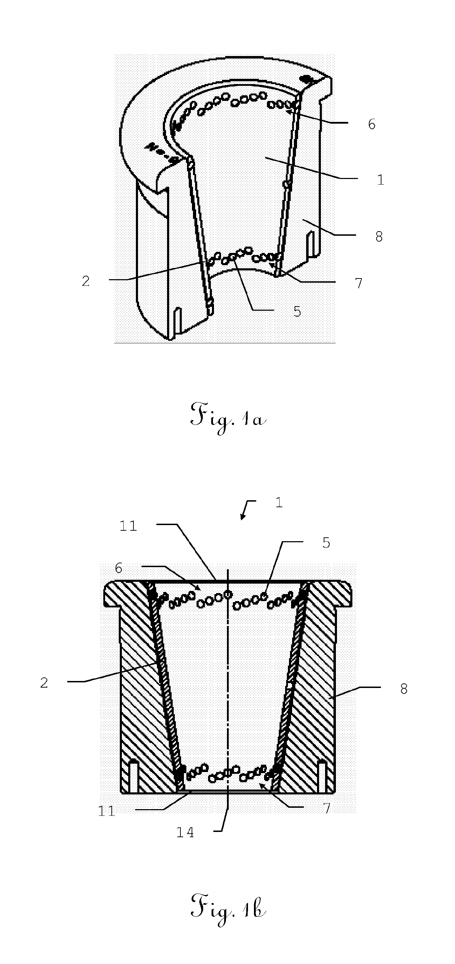

Figuren 1a und 1b zeigen eine Schnittdarstellung eines erfindungsgemäss als Kugellager ausgebildeten Wälzlagers 1 eines Werkzeugvoreinstellgeräts in einer 3-dimensionalen Ansicht bzw. in einer Ansicht von vorne. Das Kugellager besteht aus einem hohlkegelstumpfförmigen Wälzlagerkäfig 2 mit je einzeln in dafür vorgesehene Öffnungen eingebettete Kugeln 5. Die Kugeln 5 sind so ausgebildet und angeordnet, dass sie über eine Aussenmantelfläche und eine Innenmantelfläche des Wälzlagerkäfigs 2 hervorstehen. Das Spiel zwischen den Kugeln 5 und den je einzeln dafür vorgesehenen Öffnungen des Wälzlagerkäfigs 1 ist vorteilhaft sehr gering ausgelegt, wobei die Kugeln 5 trotzdem leichtläufig um ihren Kugelmittelpunkt rotierbar sind.

Das Kugellager ist in eine konische Lagerbüchse 8 eingesetzt und zur Aufnahme eines Werkzeugs mit konischem Lagerzapfen oder einer Reduktionshülse mit konischem Aussenmantel ausgebildet und liegt dabei auf der Lagerbüchse 8 lediglich punktförmig auf den Kugeln 5 auf. Bei einer Rotation des in die Lagerbüchse 8 eingesetzten Kugellagers relativ zur Lagerbüchse 8 um die Drehachse 14 rollen nun die Kugeln 5 auf der Oberfläche der Lagerbüchse 8 entlang senkrecht zur Drehachse ausgerichteten Kreisumfangslinien der Lagerbüchsenoberfläche. Je nach Höhe, in der eine Kugel angeordnet ist, wälzen sich die Kugeln mit unterschiedlichen Geschwindigkeiten, da auch die Umfangsgeschwindigkeit des konischen Kugellagers in auf verschiedenen Höhen senkrecht zur Drehachse ausgerichteten Ebenen unterschiedlich hoch ist. Da jedoch die Kugeln 5 punktförmig aufliegen, entstehen dabei trotzdem keine Reibungen an der Lagerbüchsenoberfläche, abgesehen von einer zu vernachlässigenden Rollreibung.

Die Anordnungsgeometrie der Kugeln 5 bildet einen oberen Kugelkranz mit in einem oberen Drittel des Wälzlagerkäfigs 2 ringsum angeordneten Kugeln 5 und einen unteren Kugelkranz mit in einem unteren Drittel des Wälzlagerkäfigs 2 ringsum angeordneten Kugeln 5, insbesondere sodass sich jeweils entlang Mantellinien, die durch einen Schnitt der Aussen- oder Innenmantelfläche mit einer die Drehachse enthaltenden Ebene definiert sind, des Wälzlagers 1 zwei punktförmige Auflagestellen sowohl für das in die Lagerbüchse 8 eingesetzte Wälzlager 1 als auch für einen in das Wälzlager 1 eingesetzten Werkzeuglagerzapfen ergeben. Eine solche Anordnung der Kugeln 5 erzeugt eine genau bestimmte Auflage und verbessert dadurch eine Positioniergenauigkeit des Werkzeugs, wohingegen bei Linienauflagen eine Überbestimmtheit der Auflage gegeben ist und sich dadurch Formungenauigkeiten der Komponenten stärker negativ auf die Positioniergenauigkeit des Werkzeugs in der Lagerbüchse auswirken. Ebenso kann die Rundlaufgenauigkeit eines eingesetzten Werkzeugs bei einer Rotation um die Drehachse 14 durch die nicht überbestimmte, jeweils punktförmige Auflage des Werkzeugs, die anhand des erfindungsgemässen Kugellagers bereitgestellt wird, verbessert werden.

Allerdings kann ein erfindungsgemäss als Kugellager ausgebildetes Wälzlager 1 auch einen oder mehrere weitere Kugelkränze zwischen dem oberen und dem unteren Kugelkranz 6,7 aufweisen.

Die Kugeln 5 können, wie nach dem Stand der Technik für Kugellager bekannt, aus formstabilem Material, wie metallenem oder metallähnlichem Material, ausgebildet sein.

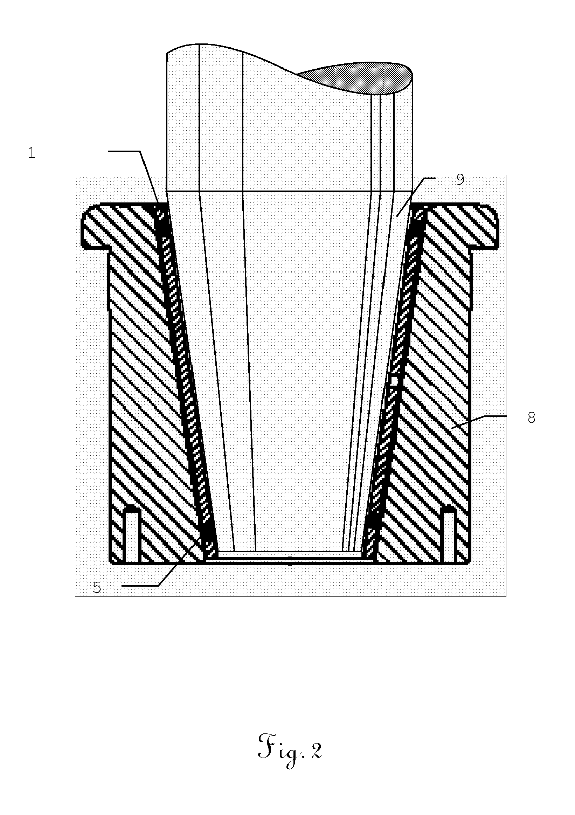

In Figur 2 ist das in den Figuren 1a und 1b gezeigte, als Kugellager ausgebildete Wälzlager 1 dargestellt, welches in die Lagerbüchse 8 eingesetzt ist. Darüber hinaus zeigt Figur 2 einen in das Kugellager eingesetzten konischen Lagerzapfen 9 eines zu vermessenden und/oder einzustellenden Werkzeugs. Der Werkzeuglagerzapfen 9 liegt dabei jeweils punktförmig auf den Kugeln 5 des Kugellagers auf. Durch das Eigengewicht ergibt sich beim Einsetzen des Werkzeugs in das Lager 1 sofort eine stabile, exakt vorgegebene Position, in welcher das Werkzeug um die Drehachse leicht rotierbar ist. Bei einer Rotation des eingesetzten Werkzeugs ergibt sich für das Kugellager die halbe Winkelgeschwindigkeit derer des Werkzeugs.

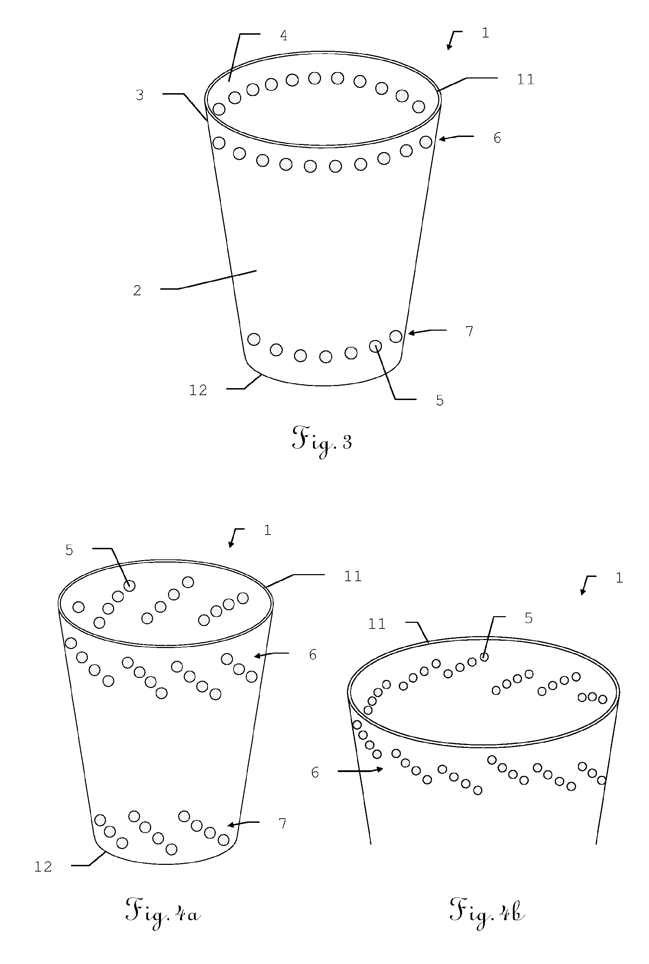

Figur 3 zeigt ein erfindungsgemässes Kugellager als Wälzlager 1 mit einem Wälzlagerkäfig 2, in den die um ihren Mittelpunkt rotierbaren Kugeln 5 eingebettet sind. Das Kugellager ist hohlkegelstumpfförmig ausgebildet und weist eine Aussenmantelfläche 3 und eine Innenmantelfläche 4 auf, über die die Kugeln zum Bilden der Punktauflagen jeweils hinausragen. Der Wälzlagerkäfig 2 weist einen oberen Rand 11 und einen unteren Rand 12 auf, wobei der obere Kugelkranz 6 an den oberen Rand 11 und der untere Kugelkranz 7 an den unteren Rand 11 anschliessend angeordnet ist, sodass ein möglichst grosser Abstand zwischen den Kugelkränzen 6,7 entsteht. Je weiter die punktförmigen Auflagestellen entlang Mantellinien entfernt sind, desto bestimmter kann die Position und desto grösser kann prinzipiell die Positionsstabilität eines in das Wälzlager 1 eingesetzten Werkzeugs sein.

Die beiden Kugelkränze 6,7 sind jeweils entlang einer Umfangslinie, die sich durch einen Schnitt des Wälzlagers 1 mit einer senkrecht zur Drehachse ausgerichteten Ebene ergibt, angeordnet und bilden somit kreisförmige Kränze entlang des Wälzlagerkäfigumfangs. Die Kugeln 5 eines Kranzes können dabei jeweils in gleichen Abständen zueinander angeordnet sein. Jede Mantellinie des Wälzlagerkäfigs 2 schneidet höchstens eine Kugel 5 des oberen Kugelkranzes 6 und eine Kugel 5 des unteren Kugelkranzes 7, sodass sich höchstens zwei punktförmige Auflagestellen entlang einer Mantellinie ergeben und sodass keine Überbestimmtheit beim Aufliegen auf der Lagerbüchse und bei der Auflage eines eingesetzten Werkzeugs entsteht.

Vorteilhaft ist der Wälzlagerkäfig 2 einstückig ausgebildet und besteht aus Kunststoff, insbesondere Polyamid, Polyurethan, thermoplastischem Polyester, Tetrafluoräthylen oder Polyäthylen. Hergestellt werden kann der Wälzlagerkäfig 2 beispielsweise im Spritzgussverfahren, wobei die einzelnen Aussparungen für die Kugeln insbesondere so ausgebildet sein können, dass die Kugeln jeweils in die Aussparungen eingedrückt werden können und anschliessend rotierbar, im Wesentlichen jedoch positionsfixiert in den Aussparungen verbleiben.

Allerdings kann der Wälzlagerkäfig 2 ebenso aus einem metallischen Werkstoff, wie beispielsweise Stahl, Messing oder Aluminium, bestehen.

Figuren 4a und 4b stellen eine weitere Ausführungsform für die Anordnungsgeometrie der Kugeln 5 im Wälzlager 1 dar, wobei Figur 4b eine Zoomdarstellung von Figur 4a zeigt. Die Kugeln 5 bilden wiederum einen oberen und einen unteren Kugelkranz 6,7 im Wesentlichen entlang einer Umfangslinie, wobei die Kugeln 5 jeweils auf zur Umfangslinie geneigten Linien angeordnet sind. Die geneigten Linien sind in Umfangsrichtung versetzt angeordnet und weisen insbesondere eine gleiche Steigung auf, wobei eine Mantellinie, die durch einen Schnitt der Aussen- oder Innenmantelfläche 3,4 mit einer die Drehachse enthaltenden Ebene definiert ist, jeweils höchstens von einer schrägen Linie pro Kugelkranz 6,7 geschnitten wird.

Des Weiteren sind die schrägen Linien leicht in ihrer Höhe versetzt angeordnet, sodass sich beispielsweise in einem ab-c-Rhythmus jeweils variierende Abstände der schrägen Linien zum jeweils benachbarten Rand ergeben und sich das Anordnungsmuster jeweils bei einer 90°-Drehung des Wälzlagers 1 um die Drehachse wiederholt, was durch die Zoomdarstellung in Figur 4b verdeutlicht werden soll.

Dies bewirkt Punktauflagen mit innerhalb eines Kugelkranzes geringfügig variierenden Höhen, sodass sich eine sehr stabile Position für einen eingesetzten Werkzeuglagerzapfen einstellt. Ebenso kann durch eine solche Kugelanordnungsgeometrie eine leichtgängige Rotierbarkeit des Werkzeugs sowie eine hohe Rundlaufgenauigkeit um die Drehachse realisiert werden.

Insbesondere können alle Kugeln 5 des jeweils oberen und/oder unteren Kugelkranzes 6,7 in Arbeitsstellung des Wälzlagers 1 auf unterschiedlichen Höhen in der Lagerbüchse 8 angeordnet sein, sodass alle Kugeln 5 bei einer Rotation des Wälzlagers 1 um die Drehachse 14 jeweils unterschiedliche Spuren zurücklegen. Dies führt dazu, dass sich die von den Kugeln 5 jeweils zurückgelegten Laufbahnen bei einer Rotation des Wälzlagers 1 um die Drehachse 14 nicht entsprechen. Dadurch können - beispielsweise durch ein Laufen der Kugeln 5 in denselben Spuren bedingte - Abnutzungserscheinungen an der Lagerbüchse vermieden werden.

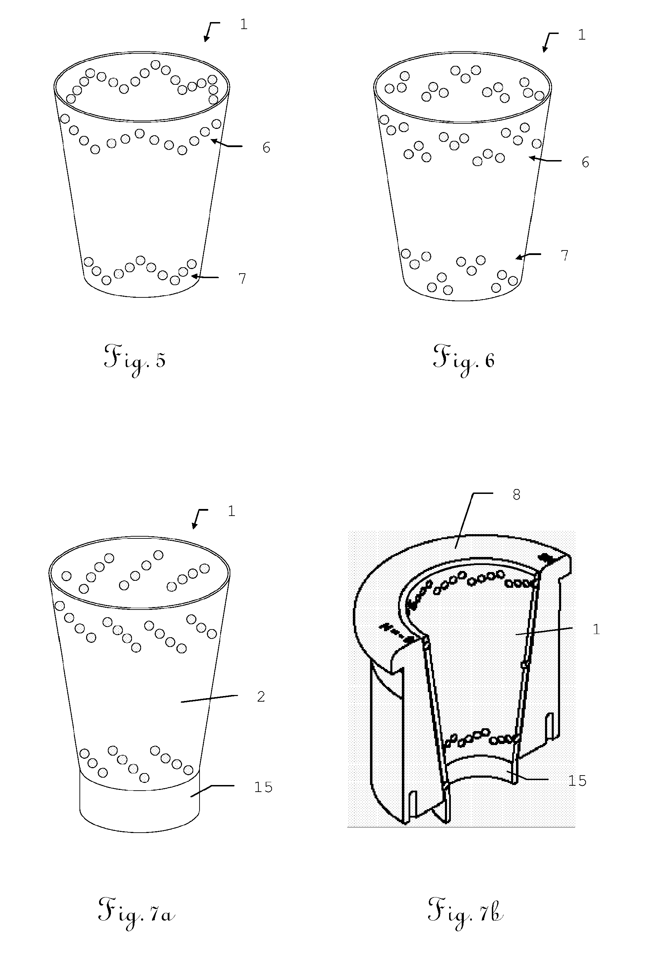

Figuren 5 und 6 zeigen zwei weitere Anordnungsmuster für die Kugeln 5. Die Kugeln 5 eines Kugelkranzes sind jeweils wieder im Wesentlichen entlang einer Umfangslinie des Wälzlagerkäfigs angeordnet. In Figur 5 sind die Kugeln 5 auf einer Zick-Zack-Linie um die Umfangslinie positioniert und in Figur 6 bilden die Kugeln 5 jeweils Dreiecke, die entlang der Umfangslinie leicht in ihrer Höhe versetzt angeordnet sind.

Figuren 7a und 7b zeigen ein erfindungsgemässes Wälzlager 1, das in Figur 7b in eine Lagerbüchse 8 eingesetzt ist. Das als Kugellager ausgebildete Wälzlager 1 weist erfindungsgemäss einen Wälzlagerkäfig 2 mit einer in Richtung der Drehachse bündig an den kegelstumpfförmigen Teil anschliessenden zylindrischen Verlängerung 15 als Zylinder-Teil auf. Die Verlängerung 15 ist in Arbeitsstellung des Wälzlagers 1 nach unten hin angeordnet, sodass die Verlängerung 15 aus der nach unten geöffneten konischen Lagerbüchse 8 hinausragt.

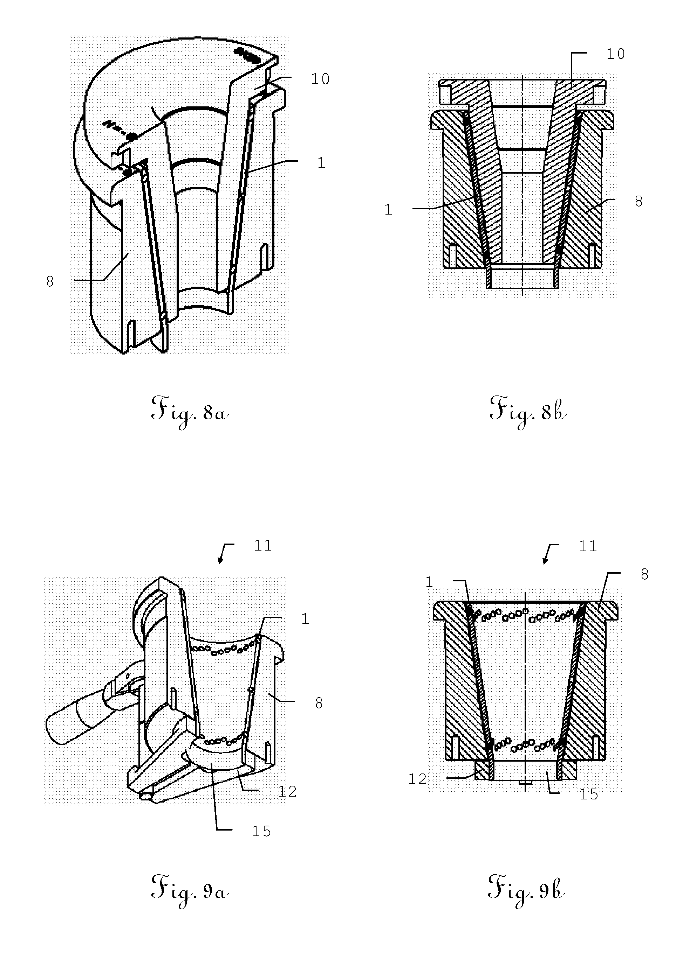

Figuren 8a und 8b zeigen eine Schnittdarstellung des in Figur 7b dargestellten Wälzlagers 1 in der Lagerbüchse 8, wobei in das Wälzlager 1 eine Reduktionshülse 10 mit konischem Aussenmantel eingesetzt ist, in einer 3-dimensionalen Ansicht bzw. in einer Ansicht von vorne. Die Reduktionshülse 10 stellt einen Adapter zur Aufnahe eines Werkzeugs mit einem konischen Lagerzapfen mit geringerem Durchmesser dar. Ähnliche Reduktionshülsen sind bereits nach dem Stand der Technik bekannt und können in verschiedenste Wälzlager eingesetzt werden.

Figuren 9a und 9b stellen eine Schnittdarstellung eines erfindungsgemässen Werkzeugvoreinstellgeräts 11 mit dem in Figur 7b dargestellten Wälzlager 1 in der Lagerbüchse 8 in einer 3-dimensionalen Ansicht bzw. in einer Ansicht von vorne dar. Zusätzlich weist das Werkzeugvoreinstellgerät 11 eine Festklemmvorrichtung 12 zum Greifen der Verlängerung 15 des Wälzlagerkäfigs auf. Dazu sind zwei Klemmbacken um die Verlängerung herum angeordnet, welche Backen in einer geschlossenen Stellung die Verlängerung kraftschlüssig festklemmen. Die bei der Klemmverbindung wirkenden Kräfte zeigen im Wesentlichen radial in Richtung der Drehachse und sind senkrecht zu dieser ausgerichtet. Anhand eines Hebels können die Backen der Festklemmvorrichtung 12 wählbar in die geschlossene oder in eine offene Stellung, in der die Backen die Verlängerung 15 nicht greifen und das Wälzlager 1 somit drehbar ist, gebracht werden.

Alternativ könnte die Festklemmvorrichtung 12 zum Festklemmen des Wälzlagerkäfigs auch von innerhalb der hohlzylindrischen Verlängerung 15 an diese angreifen, beispielsweise mittels Ausspreizung von in der Verlängerung 15 angeordneten Klemmbacken, sodass der Wälzlagerkäfig rotationsfixierbar ist.

Die Anwendung der erfindungsgemässen Festklemmvorrichtung 12 ist dabei nicht speziell auf als Kugellager ausgebildete Wälzlager 1 beschränkt. So könnte jedes hohlkegelstumpfförmige Wälzlager mit konischem Wälzlagerkäfig, wie beispielsweise auch ein Nadellager, mit einer zylindrischen Verlängerung oder mit einem Abschnitt mit zylinderförmigem Aussenmantel ausgebildet sein und sich somit zum Festklemmen durch eine erfindungsgemässe Festklemmvorrichtung eignen.

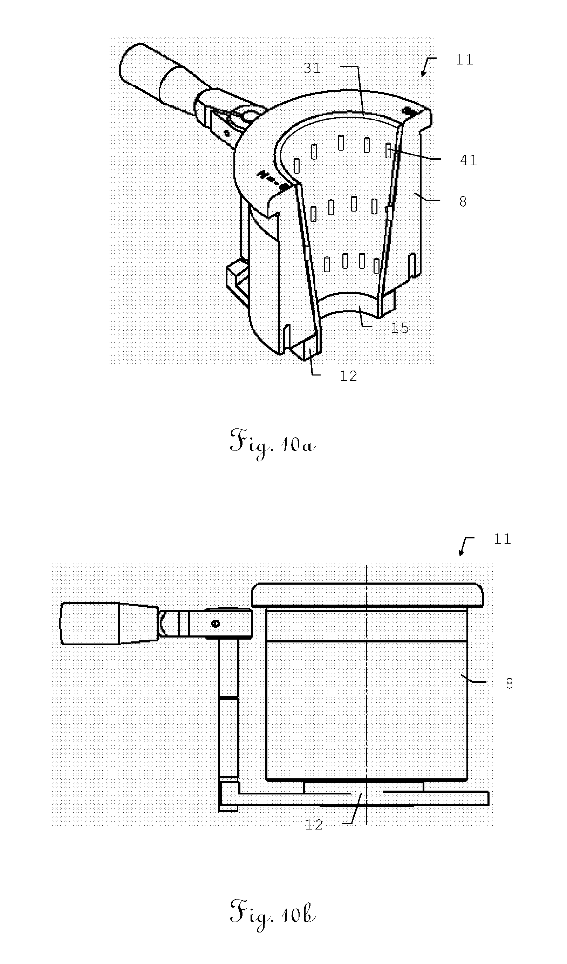

So ist in Figur 10a eine Schnittdarstellung eines als Nadellager 41 ausgebildeten Wälzlagers mit konischem Wälzlagerkäfig und mit einer erfindungsgemässen, bündig nach unten anschliessenden Verlängerung 15 gezeigt. Die Verlängerung 15 ragt nach unten über die Lagerbüchse 8 hinaus und kann durch die Festklemmvorrichtung 12 gegriffen werden, sodass der Wälzlagerkäfig rotationsfixiert ist. Dadurch kann eine gewünschte Drehstellung des eingesetzten Werkzeugs fixiert und das Werkzeug in dieser Stellung vermessen und/oder eingestellt werden, ohne das Werkzeug selbst angreifen oder berühren zu müssen, sodass das Werkzeug durch den Vorgang des Festklemmens nicht aus der eigentlich gewünschten Stellung verrutscht wird.

Figur 10b zeigt eine Seitenansicht des in Figur 10a beschriebenen Werkzeugvoreinstellgeräts 11 mit der Festklemmvorrichtung 15, die unterhalb der Lagerbüchse 8 eine greifzangenartige Vorrichtung zum Angreifen und Festklemmen eines nach unten hinausragenden Teils der zylindrischen Wälzlagerkäfigverlängerung aufweist.

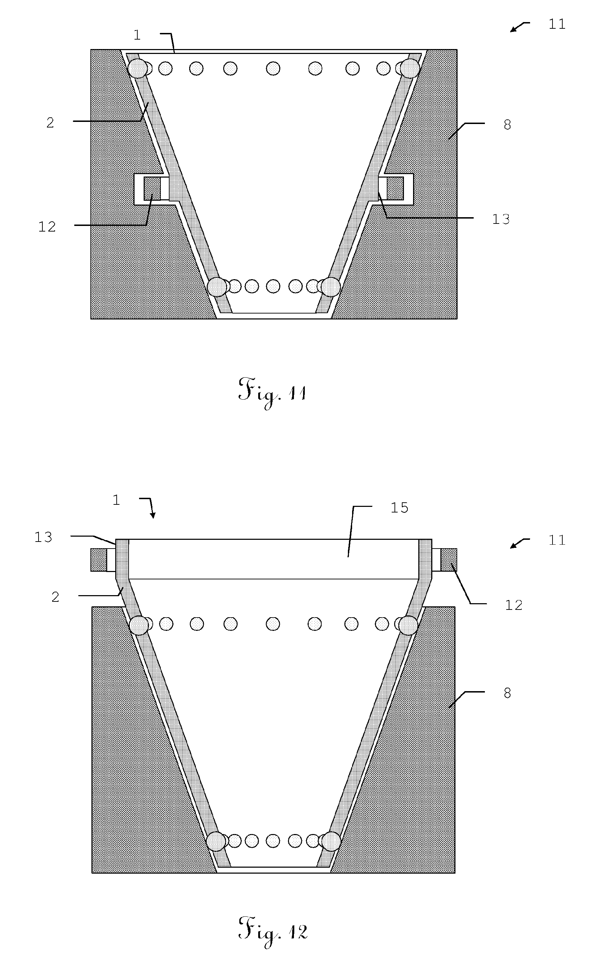

In Figur 11 ist eine alternative erfindungsgemässe Ausführung des Wälzlagers 1 und der Festklemmvorrichtung 12 in einer Schnittdarstellung gezeigt. Die Aussenmantelfläche des Wälzlagerkäfigs 2 weist einen zylindermantelförmigen Zylinder-Teil 13 zum Festklemmen des Wälzlagers 1 auf. Die Festklemmvorrichtung 12 besteht aus zangenartigen Backen, die in dafür vorgesehenen Aussparungen der Lagerbüchse 8 angeordnet sind. Die zangenartigen Backen können durch einen Benutzer zusammengeführt werden, sodass diese einen Teil des Zylinder-Teils 13 des Wälzlagerkäfigs 2 greifen, wobei die durch die Festklemmvorrichtung 12 auf den Wälzlagerkäfig 2 ausgeübte Greif-Kräfte dann in senkrecht zur Drehachse gerichteten Richtungen wirken. Dadurch kann ein Verrutschen des lediglich auf den Kugeln aufliegenden Werkzeugs beim Festklemmvorgang verhindert werden, da ein horizontal gerichtetes Greifen des Wälzlagerkäfigs die Position der Kugeln, auf welche durch die Masse des eingesetzten Werkzeugs ein hoher Druck lastet, nicht beeinflusst.

Figur 12 zeigt eine weitere alternative Ausführung eines erfindungsgemässen Werkzeugvoreinstellgeräts 11, wobei der Wälzlagerkäfig 2 eine bündig nach oben anschliessende zylindrische Verlängerung 15 aufweist, die über die Lagerbüchse 8 hinausragt und den Zylinder-Teil 13 mit zylindrischem Aussenmantelabschnitt bildet. Die Festklemmvorrichtung 12 ist um einen Teil der zylindrischen Verlängerung 15 herum und über der Lagerbüchse 8 angeordnet, sowie zum Greifen des Teils der zylindrischen Verlängerung 15 und somit zum Rotationsfixieren des Wälzlagers 1 ausgebildet.

Es versteht sich, dass diese dargestellten Figuren nur Beispiele möglicher Ausführungsformen darstellen.

## Patentansprüche

1. Wälzlager (1) eines Werkzeugvoreinstellgerätes, mit einem hohlkegelstumpfförmigen Wälzlagerkäfig (2), zum Einsatz in eine konische Lagerbüchse (8) und zur Aufnahme eines Werkzeugs mit konisch ausgebildetem Lagerzapfen (9) oder einer Reduktionshülse (10) mit konischem Aussenmantel, wobei der Wälzlagerkäfig (2) eine Aussenmantelfläche (3), eine Innenmantelfläche (4) und eine Drehachse (14) aufweist,
**dadurch gekennzeichnet, dass**
das Wälzlager (1) als Kugellager und der Wälzlagerkäfig (2) als Käfig für je einzeln in Öffnungen eingebettete Kugeln (5) ausgebildet ist, sodass die Kugeln (5) über die Innen- und
Aussenmantelfläche (3;4) hervorstehen,
wobei die Kugeln so im Wälzlagerkäfig (2) angeordnet sind, dass sie mindestens einen oberen Kugelkranz (6) in einem oberen Drittel des Wälzlagerkäfigs und einen unteren Kugelkranz (7) in einem unteren Drittel des Wälzlagerkäfigs bilden.

2. Wälzlager (1) nach Anspruch 1,
**dadurch gekennzeichnet, dass**
der obere Kugelkranz (6) an einen oberen Rand (11) des Wälzlagerkäfigs (2) und der untere Kugelkranz (7) an einen unteren Rand (12) des Wälzlagerkäfigs 2 anschliessend angeordnet ist.

3. Wälzlager (1) nach Anspruch 1 oder 2,
**dadurch gekennzeichnet, dass**
der obere und/oder der untere Kugelkranz (6;7) jeweils auf einer Umfangslinie, die sich durch einen Schnitt des Wälzlagers (1) mit einer senkrecht zur Drehachse ausgerichteten Ebene ergibt, angeordnet sind.

4. Wälzlager (1) nach Anspruch 1 oder 2,
**dadurch gekennzeichnet, dass**
der obere und/oder der untere Kugelkranz (6;7) auf zu Umfangslinien geneigten Linien, die sich insbesondere entlang der Umfangslinie wiederholen, angeordnet sind, wobei sich die Umfangslinie durch einen Schnitt des Wälzlagers (1) mit einer senkrecht zur Drehachse ausgerichteten Ebene ergibt und die geneigten Linien jeweils durch Mittelpunkte von mindestens zwei, insbesondere vier, der Kugeln (5) definiert werden.

5. Wälzlager (1) nach Anspruch 4,
**dadurch gekennzeichnet, dass**
alle Kugeln (5) des jeweils oberen und/oder unteren Kugelkranzes (6;7) in Arbeitsstellung des Wälzlagers (1) auf unterschiedlichen Höhen in der Lagerbüchse (8) angeordnet sind, sodass alle Kugeln (5) bei einer Rotation des Wälzlagers (1) um die Drehachse (14) jeweils unterschiedliche Spuren zurücklegen.

6. Wälzlager (1) nach Anspruch 4 oder 5,
**dadurch gekennzeichnet, dass**
die geneigten Linien eine gleiche Steigung aufweisen.

7. Wälzlager (1) nach einem der Ansprüche 4 bis 6,
**dadurch gekennzeichnet, dass**
die geneigten Linien eine gleiche Steigung aufweisen.

8. Wälzlager (1) nach einem der Ansprüche 4 bis 7,
**dadurch gekennzeichnet, dass**
die geneigten Linien in ihrer Höhe versetzt angeordnet sind, insbesondere wobei sich ein Anordnungsmuster der Kugeln (5) jeweils bei einer 90°-Drehung um die Drehachse wiederholt.

9. Wälzlager (1) nach einem der vorangehenden Ansprüche,
**dadurch gekennzeichnet, dass**
jede Mantellinie des Wälzlagerkäfigs (2) jeweils höchstens eine Kugel (5) des oberen Kugelkranzes (6) und eine Kugel (5) des unteren Kugelkranzes (7) schneidet, wobei eine Mantellinie durch einen Schnitt der Aussen- oder Innenmantelfläche (3,4) mit einer die Drehachse enthaltenden Ebene definiert ist.

10. Wälzlager (1) nach einem der vorangehenden Ansprüche,
**dadurch gekennzeichnet, dass**
der Wälzlagerkäfig (2) einstückig ausgebildet ist und aus Kunststoff, insbesondere Polyamid, Polyurethan, thermoplastischem Polyester, Tetrafluoräthylen oder Polyäthylen, besteht.

11. Wälzlager (1) nach einem der Ansprüche 1 bis 8,
**dadurch gekennzeichnet, dass**
der Wälzlagerkäfig (2) einstückig ausgebildet ist und aus einem metallischen Werkstoff, insbesondere Stahl, Messing oder Aluminium, besteht.

12. Wälzlager (1) nach einem der vorangehenden Ansprüche,
**dadurch gekennzeichnet, dass**
die Aussenmantelfläche (3) des Wälzlagerkäfigs (2) einen zylindermantelförmigen Zylinder-Teil (13) zum Festklemmen des Wälzlagers (1) aufweist.

13. Wälzlager (1) nach Anspruch 11,
**dadurch gekennzeichnet, dass**
der Wälzlagerkäfig (2) eine in Richtung der Drehachse bündig anschliessende, zylindrische Verlängerung (15), die den Zylinder-Teil (13) bildet, aufweist.

14. Wälzlager (1) nach Anspruch 12,
**dadurch gekennzeichnet, dass**
die Verlängerung (15) in Arbeitsstellung des Wälzlagers (1) nach unten hin anschliesst.

15. Werkzeugvoreinstellgerät (11) zur Aufnahme eines Werkzeugs mit konischem Lagerzapfen (9), mit
• einer konischen, in Arbeitsstellung nach oben geöffneten Lagerbüchse (8),
• einem in die Lagerbüchse einsetzbaren Wälzlager (1) nach einem der Ansprüche 1 bis 12 und
• einer Festklemmvorrichtung (12) zum Angreifen eines Teils des Wälzlagerkäfigs (2), sodass das Wälzlager (1) rotationsfixierbar ist.

16. Werkzeugvoreinstellgerät (11) nach Anspruch 14
**dadurch gekennzeichnet, dass**
• das Wälzlager (1) nach einem der Ansprüche 11 bis 13 und
• die Festklemmvorrichtung (12) zum Angreifen mindestens eines Teiles des Zylinder-Teils (13) ausgebildet ist, wobei durch die
Festklemmvorrichtung (12) auf den Wälzlagerkäfig (2) ausgeübte Greif-Kräfte im Wesentlichen in senkrecht zur Drehachse gerichteten Richtungen wirken.

17. Werkzeugvoreinstellgerät (11) nach Anspruch 15
**dadurch gekennzeichnet, dass**
• die Lagerbüchse (8) in Arbeitsstellung nach unten geöffnet ist,
• das Wälzlager nach Anspruch 13 ausgebildet ist, wobei die Verlängerung (15) mindestens teilweise nach unten aus der Lagerbüchse (8) hinausragt, und
• die Festklemmvorrichtung (12) zum Greifen eines aus der Lagerbüchse (8) hinausragenden Teils der Verlängerung (15) ausgebildet ist.

18. Werkzeugvoreinstellgerät (11) nach einem der
Ansprüche 14 bis 16,
**dadurch gekennzeichnet, dass**
die Festklemmvorrichtung (12) wählbar
• eine geöffnete Stellung, in der das Wälzlager (1) nicht festgeklemmt und somit drehbar ist, und
• eine geschlossene Stellung, in der der hinausragende Teil, insbesondere durch eine kraftschlüssige Verbindung, festgeklemmt und somit das Wälzlager (1) rotationsfixiert ist,
aufweist.
